**Europäisches Patentamt**

**European Patent Office**

**Office européen des brevets**

(11) Publication number: **0 168 987**

**B1**

## (12) EUROPEAN PATENT SPECIFICATION

(45) Date of publication of patent specification: **16.05.90**

(51) Int. Cl.⁵: **G 11 B 15/665**

(21) Application number: **85304407.1**

(22) Date of filing: **20.06.85**

(54) Magnetic recording and/or reproducing apparatus.

(30) Priority: **20.06.84 JP 126835/84**

(43) Date of publication of application:
**22.01.86 Bulletin 86/04**

(45) Publication of the grant of the patent:
**16.05.90 Bulletin 90/20**

(84) Designated Contracting States:
**AT DE FR GB NL**

(56) References cited:
**EP-A-0 071 975**
**EP-A-0 087 952**
**EP-A-0 105 501**
**DE-A-3 410 229**

(73) Proprietor: **SONY CORPORATION**
**7-35 Kitashinagawa 6-Chome Shinagawa-ku**
**Tokyo 141 (JP)**

(72) Inventor: **Ohyama, Masao c/o Sony Corporation**
**Patent Department 7-35, Kitashinagawa 6-chome**
**Shinagawa-ku Tokyo (JP)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to magnetic recording and/or reproducing apparatus and more particularly to a tape loading mechanism, a reel table brake mechanism and fast forward/rewind mode switching means of magnetic recording and/or reproducing apparatus.

In a prior art magnetic recording and/or reproducing apparatus having a tape loading mechanism, a reel table brake mechanism and further a pinch roller pressing mechanism, one motor (loading motor) is used to drive the tape loading mechanism and plungers are separately used to control the reel table brake mechanism and the pinch roller pressing mechanism, in which in accordance with the changeover of the respective operation modes of the magnetic recording and/or reproducing apparatus, the plungers are controlled to be turned on and off. Accordingly, it is difficult to establish the operating timing of the brake and pinch roller and also an electric circuit for controlling them becomes unduly complicated. Further, the number of plungers is increased and so the manufacturing cost of the magnetic recording and/or reproducing apparatus is also increased.

As a loading mechanism of the prior art magnetic recording and/or reproducing apparatus of this kind, or a so-called M-type loading mechanism, there is known a so-called loading ring type in which two rings are rotated around a rotary head drum in the positive and reverse directions and, these rings and the tape guide post member are coupled with one another by a spring in which as the rings are rotated, the tape guide post member is moved along a guide groove of substantially inverted V-shape formed to the rotary head drum from the side of the reel tables or a so-called loading arm system in which a pair of left and right loading arms are formed by link-coupling the first and second half portions thereof, the guideposts are attached to the first half portions of the arm and the second half portions of the arms are coupled to limiter gears, in which both gears coupled with both arms are directly engaged with each other and one of the limiter gears is rotated thereby to allow both arms to move both tape guide post members along the guide grooves similarly to the above.

However, in the former one it is necessary to arrange two rings around the rotary head drum while in the latter one the limiter gears must be large in diameter because both limiter gears to which the rear ends of both loading arms are coupled are directly coupled with each other. Accordingly, in both kinds the loading mechanisms thereof require large spaces, so the prior art loading ring type and loading arm type are unsuitable for magnetic recording and/or reproducing apparatus of small size.

Further, in the prior art magnetic recording and/or reproducing apparatus, since the brake mechanisms for the supply reel table and take-up reel table are operated simultaneously and are controlled through the link mechanism, the arrangement thereof becomes complicated and large in size. Thus, the brake mechanism thereof requires a large space and obstructs the overall arrangement from being made small in size. Moreover, since the brake mechanisms are arranged to engage and release both reel tables simultaneously both in loading and normal speed transporting modes, both brake mechanisms release both reel tables and hence the reel tables become completely free as in the apparatus according to the EP-A-71975. Thus, the tape is easily slackened upon loading and the tape contact degree to the head drum becomes weak and so, there is a fear that the tracing by the magnetic head upon the tape will become unstable.

Furthermore, as the prior art high speed drive mechanism for the reel tables of the magnetic recording and/or reproducing apparatus of this kind, there are known a so-called reel motor type in which a high speed transport gear movable between the supply reel table and the take-up reel table is driven in different rotation directions by a reel motor thereby to transport the tape in the fast forward mode and the rewind mode, a so-called capstan positive and negative direction rotation type in which an idler is provided between a rotation member rotated by the drive force of the capstan and both reel tables and by the rotation of the capstan in the positive direction and the negative direction, both reel tables are rotated through the idler at high speed. There is also the so-called mechanical type in which a rotation member rotated by the drive force of the capstan is supported to be able to swing by a link member and this rotation member transmits the rotation force directly to one reel table and transmits it through a transferrable rotation member to the other reel table thereby to transport the reel tables in the fast forward mode or rewind mode, etc.

However, the reel motor type requires the reel motor in addition to the capstan drive motor so that the manufacturing cost thereof is increased and is disadvantageous from a power saving standpoint.

Further, the capstan positive and negative rotation type has a complicated electric circuit arrangement for rotating the capstan in the positive and negative directions and this increases the manufacturing cost. Furthermore, the mechanical one has such a defect that the operation thereof will easily become unstable since the rotation member is supported to be able to swing.

Patent Specification EP-A-0 071 975 discloses a mode setting arrangement for a video tape recorder according to the preamble of claim 1 with a cam system having first and second cams with a first lever co-operating with the first cam to control a pinch roller and a second lever co-operating with the second cam and controlling supply of driving force to reel tables. A tape loading mechanism and tape guide means to extract magnetic tape from a cassette and engage it with a drum is driven by the first cam and brake control means is driven by the second cam to control brakes on the reel tables to set the mode of the recorder, the brake means comprising pivoted levers formed with contact portions at one of the ends thereof to contact or leave the reel tables. The brake control means is controlled so as slidably to move such that when the cams set a stop mode, the brake levers are urged against the reel tables, and when they set a high speed fast forward/rewind mode or normal tape speed forward mode the brake levers relax the reel tables.

According to the invention there is provided magnetic recording and/or reproducing apparatus comprising:

(a) a magnetic head assembly having a magnetic head for recording a signal on a magnetic tape or reproducing it therefrom;

(b) tape guide means provided freely to move between a non-operation position within a tape cassette and an operation position to draw out magnetic tape from the tape cassette at the non-operation position and to form a predetermined tape path relative to the magnetic head assembly;

(c) loading means engaging with the tape guide means and to move the tape guide means;

(d) a supply reel table to support and rotate a reel which supplies the magnetic tape;

(e) a take-up reel table to support and rotate a reel which takes up the magnetic tape;

(f) brake means provided freely to contact or release the supply reel table and the take-up reel table, the brake means comprises pivoted levers formed with contact portions provided at one of the ends thereof which freely contact with or leave the reel tables;

(g) brake control means including a brake control slider to control the brake means; and

(h) a motor;

(i) capstan means to transport the magnetic tape at a constant tape speed, pinch roller support means rotatably supported on the chassis and to support a pinch roller, and pinch roller control means to control the pinch roller support means such that the pinch roller is urged against or released from being urged against the capstan means;

(j) a cam gear having a first cam portion and a second cam portion, the gear means being rotated by the drive force of the motor, the loading means being driven by the first cam portion thereby to move the tape guide means and the brake control means being driven by the second cam portion thereby to control the brake means to contact or release the reel tables, thereby to determine at least a stop mode, a tape loading mode, a tape unloading mode, a high speed fast forward/rewind mode and a normal tape speed forward mode; and

(k) a rotatable mode setting lever of L-shape pivoted at its elbow, one end of the mode setting lever engaging the second cam portion and being moved by the second cam portion and the other end of the mode setting lever engaging and controlling the brake slider so as to set a predetermined one of the modes, the brake control slider being controlled so as slidably to move such that when the stop mode is set by the cam gear, both of the brake means are urged against the supply reel table and the take-up reel table, and when the high speed tape fast forward/rewind mode or normal tape speed forward mode is set by the cam gear, both of the brake means release both reel tables;

characterised in that control portions are provided at the other of the ends of the pivoted levers forming the brake means and can engage with the brake control slider; the brake means are supported on a sub-chassis freely to rotate; and when the tape loading mode is set by the cam gear, one of the brake means is urged against either of the reel tables and the other brake means releases the other of the reel table.

The loading mechanism can be small-sized, the tape loading mechanism can be disposed at a desired position so that freedom in designing can be increased, the arrangement can be simplified and the rotation portion of the loading arm can be provided within a small space.

The fast forward mode and rewind mode changing operation and switching and locking operation can be carried out by a single plunger so that the operation thereof can be made stable and the construction thereof can be simplified. Further no reel motor is required and the plunger requires only the fixing operation of a stopper member without kick or actuation operation so that the power consumption of the overall apparatus can be reduced and the manufacturing cost and the maintenance cost can both be reduced.

The pinch roller can be controlled in press and disengagement by the common brake slider for controlling the brake mechanism of the reel tables, so that a plunger for pressing the pinch roller is not necessary, control being provided by a single motor for loading and braking.

The invention is diagrammatically illustrated by way of example with reference to the accompanying drawings, in which:

Figure 1 is a perspective view of an example of a rotary head type magnetic recording and/or reproducing apparatus to which this invention is applied.

Figure 2 is a plan view of the apparatus of Figure 1, illustrating its tape loading state;

Figure 3 is a bottom view of the main base plate side of the apparatus of Figure 1;

Figure 4 is a top view of the sub-base plate side of the apparatus of Figure 1;

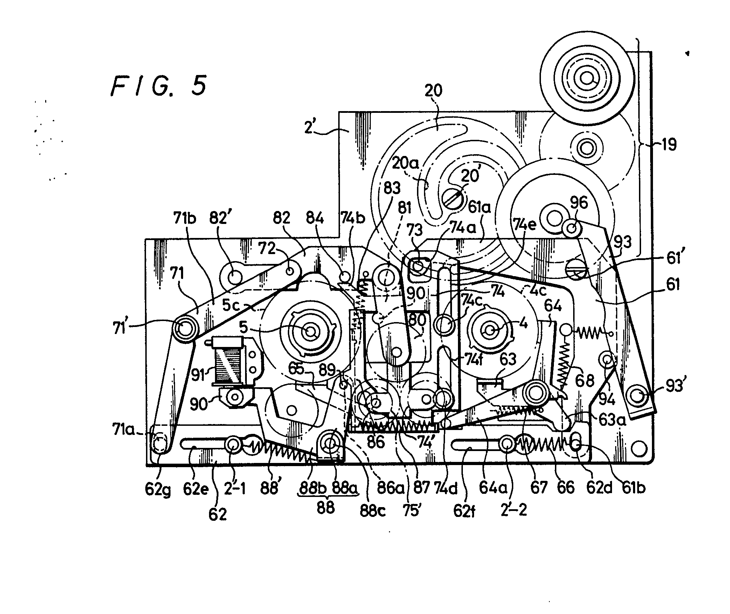

Figure 5 is a like top view to Figure 4 from which a gear member is removed;

Figures 6A and 6B are respectively top views included for explaining a loading guide groove portion;

Figures 7A, 7B and 7C are respectively plan views included for explaining the operation of a brake mechanism;

Figures 8A, 8B and 8C are respectively plan views included for explaining the operation of a pinch roller mechanism; and

Figures 9A, 9B and 9C are respectively plan views included for explaining the operation of a mechanism for rotating reel tables.

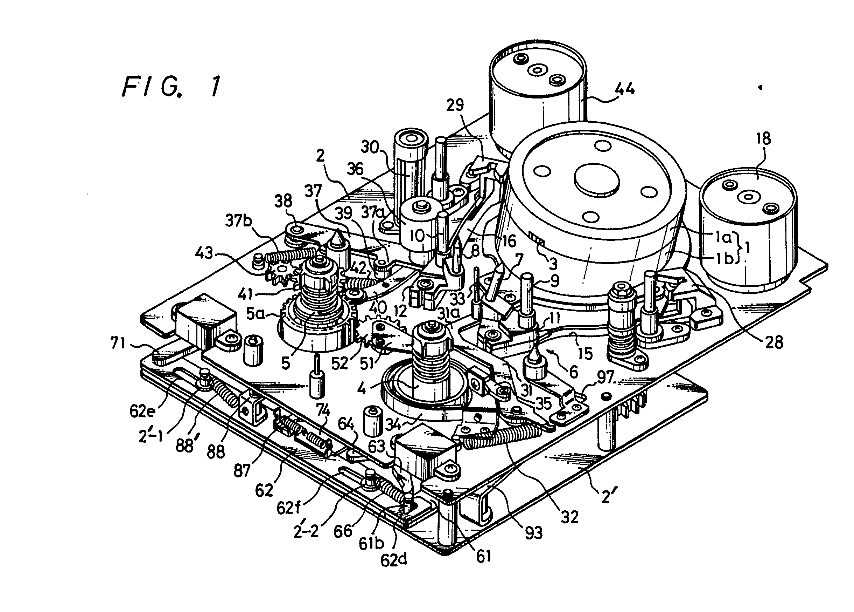

Referring to the drawings and firstly to Figure 1, magnetic recording and/or reproducing apparatus having a rotary head has a rotary head drum 1 which is formed by an upper drum 1a and a lower drum 1b. In this case, the lower drum 1b is fixed to a chassis or base plate 2 inclined at a predetermined angle thereto and the rotatable upper drum 1a has attached thereto a magnetic head 3. A loading mechanism 6 is provided adjacent the rotary head drum 1, a supply reel table 4 and a take-up reel table 5.

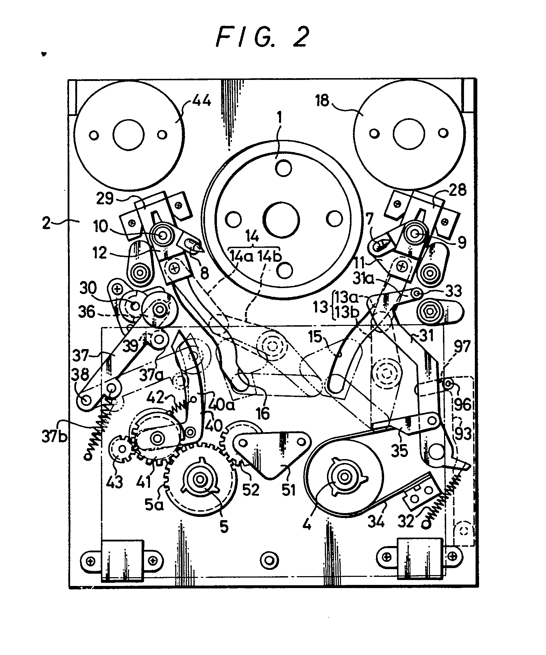

The loading mechanism 6 is formed by tape guide post mounts 11 and 12 having mounted thereon inclined tape guide posts 7 and 8, each of which is inclined in parallel to and opposite to the rotary head drum 1 when the loading is completed as will be described later, vertical tape guide posts 9 and 10 and loading arms 13 and 14 (Figure 2) which respectively move the tape guide post mounts 11 and 12. The loading arms 13 and 14 are formed with first loading arms 13a and 14a and second loading arms 13b and 14b that are rotatably linked, respectively. The first loading arms 13a and 14a support respectively at their tip ends the tape guide post mounts 11 and 12 to be freely pivotable in the horizontal direction. The tape guide post mounts 11 and 12 are movably engaged with guide grooves 15 and 16 of substantially V-shape that are formed through the base plate 2 and extend from the reel tables 4 and 5 partly around the rotary head drum 1.

The tape guide post mounts 11 and 12 are moved from the reel tables 4 and 5 towards the rotary head drum 1 when the loading arms 13 and 14 are moved by a drive mechanism so that a tape wound around the inclined tape guide posts 7, 8 and the vertical tape guide posts 9, 10 which are mounted on the tape guide post mounts 11 and 12 is loaded from the reel tables of a tape cassette (not shown) onto the rotary head drum 1.

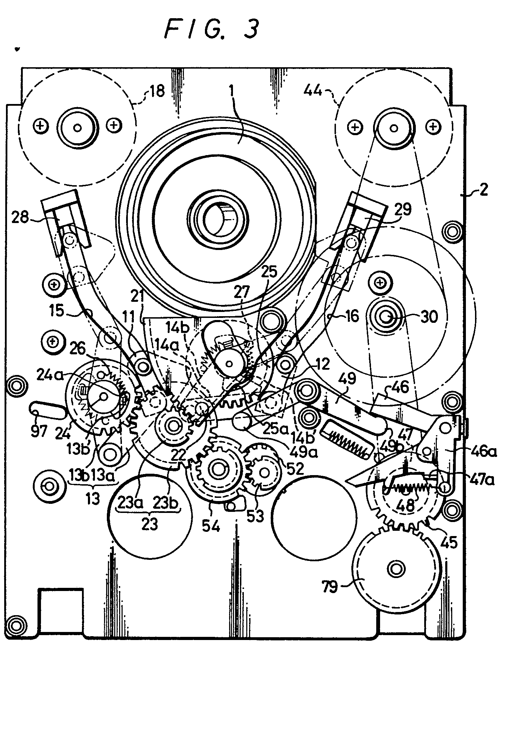

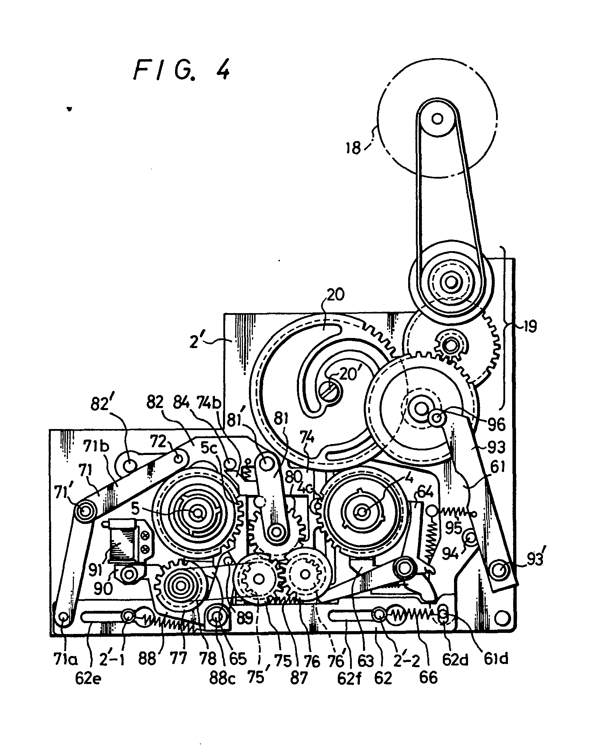

The drive mechanism for the loading mechanism 6 is shown in Figure 4. The drive force of a loading motor 18 is transmitted through a reduction gear mechanism 19 to a cam gear 20 pivotably supported on a shaft 20′ which is attached to a sub-chassis or sub-base plate 2′. As shown in Figure 3, a pin 22 protruding at the peripheral edge of a sector shape gear 21 pivotably supported on the base plate 2 is engaged with a cam groove 20a that is formed on the upper surface of the cam gear 20 to have a spiral-shape so that as the cam gear 20 is rotated, the sector shape gear 21 is rotated. The sector shape gear 21 is engaged with a small diameter tooth portion 23a of an intermediate gear 23, while a large diameter tooth portion 23b of the intermediate gear 23 is engaged with both of limiter gears 24 and 25.

Into slots 24a and 25a formed in the limiter gears 24 and 25 in their peripheral directions, there are inserted protrusions 13b′ and 14b′ protruding from the second loading arms 13b and 14b of the loading arms 13 and 14 which are pivoted to be coaxial with the limiter gears 24 and 25. The protrusions 13b′ and 14b′ and the limiter gears 24 and 25 are respectively coupled to one another through springs 26 and 27 in the rotation direction thereof so that when the sector shape gear 21 is rotated, the above-mentioned second loading arms 13b and 14b together with the limiter gear 24 and 25 are rotated. As described above, when the second loading arms 13b and 14b are rotated, the tape guide post mounts 11 and 12 are pushed through the first loading arms 13a and 14a, moved along the guide grooves 15 and 16 and thereby engaged with catchers 28 and 29 which are provided at the tip ends of the guide grooves 15 and 16.

Under this state, the guide posts 7, 8, 9 and 10 are respectively opposed to both side portions of the rotary head drum 1, or the inclined guide posts 7 and 8 placed inside are inclined in parallel to the rotary head drum 1.

In the loading mechanism 6 constructed as mentioned above, in order for the both tape guide post mounts 11 and 12 to move simultaneously and smoothly, the guide grooves 15 and 16 are formed asymmetrical with each other at their base end portions near the reel tables 4 and 5. Thus, as shown in Figures 2 and 3, the guide groove 15 has its base end portion near the supply reel table 4 formed as a smooth arc shape because the force is exerted on the tape guide post mount 11 by the loading arm 13 to push it from behind. The other guide groove 16 has its base end portion near the take-up reel 5 formed to a special shape to enable the tape guide post mount 12 to move smoothly because the force acting on the tape guide post mount 12 by the loading arm 14 pushes it from the lateral direction.

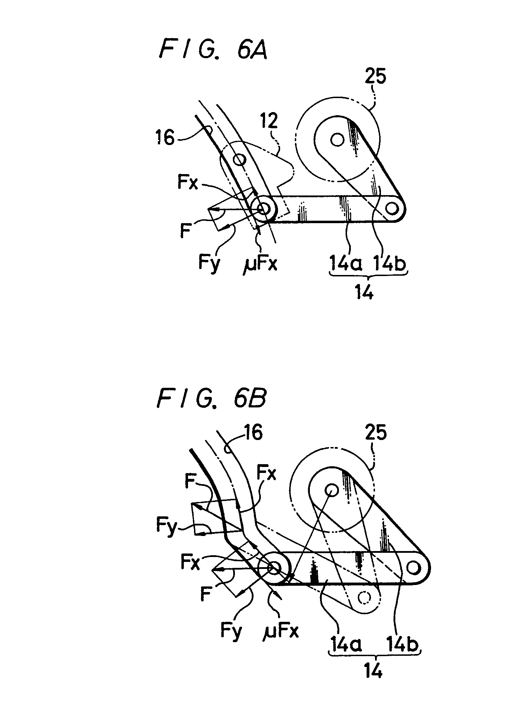

More particularly, if the guide groove 16 has its base end portion near the take-up reel 5 formed as a mere arc-shape as shown in Figure 6A, as compared with a force F exerted on the tape guide post mount 12 by the loading arm 14, a force Fx for moving the arm forward is small but a friction force Fy exerted thereon by the guide groove 16 is large so that $\mu$ Fx becomes small and hence the tape guide post mount 12 will not be moved. Therefore, if as shown in Figure 6B, the guide groove 16 has its base end portion near the take-up reel 5 formed as an arc-shape of which the centre is identical with the rotation centre of the second loading arm 14b, for the force F applied to the tape guide post mount 12, the force Fx for moving the arm forward becomes large but the friction force Fy by the guide groove 16 becomes small so that $\mu$ Fx becomes large, making the tape guide post mount 12 move smoothly. Thereafter, the tape guide post mount 12 is slidably moved similarly to the loading arm 13 and hence both tape guide post mounts 11 and 12 can similarly be moved smoothly.

Referring to Figures 1 and 2, on one side portion of the base plate 2, a tension arm 31 is pivotally supported so as to follow the movement of the tape guide post mount 11 through the spring force of a spring 32. The tension arm 31 has mounted on one of its ends a pin 33 and has attached at its base one end of a tension belt 34 by way of a rotation arm 35, the other end of the tension belt 34 being fixed to the base plate 2 so as to be wound around the supply reel table 4. An angled face portion 31a of the tension arm 31 opposes the rear end of the tape guide post mount 11 when the tape guide post mount 11 is moved to the tip end portion of the guide groove 15 so as to be engaged with the catcher 28.

At the other side portion of the base plate 2, or at the side of a capstan 30, a pinch roller arm 37 having a pinch roller 36 rotatable on its tip end is pivotally supported by a shaft 38 and the pinch roller arm 37 is rotatably biassed by a spring 37b. The pinch roller arm 37 has at the side of the pinch roller 36 a roller 39 pivotally supported through a protrusion 37a and the roller 39 rotatably contacts an inner edge of one arm portion 40a of an arm 40 of substantially L-shape which is pivoted at its elbow on the base plate 2. The arm 40 pivotally supports at the other end of its other arm portion 40b a gear 41 which is engaged with a gear portion 5a formed around the peripheral edge of the take-up reel table 5. By a spring 42, the arm 40 is biassed to rotate in the direction in which the gear 41 is engaged with the gear portion 5a of the take-up reel table 5 at all times. Further, when the pinch roller arm 37 is not operated, or before the pinch roller 36 is urged against the capstan 30, the roller 39 rotatably contacts the inner edge of said one arm portion 40a so that the arm 40 rotates against the spring force of the spring 42 to cause the gear 41 to leave the take-up reel table 5. When the pinch roller arm 37 is rotated so as to urge the pinch roller 36 against the capstan 30, the roller 39 leaves the arm 40 so that the arm 40 is rotated thereby to engage the gear 41 with the gear portion 5a of the take-up reel table 5 and a drive gear 43. The drive gear 43 coaxially supports a pulley 45 to which the drive force is transmitted from a drive motor 44. The moment the pinch roller 36 is urged against the capstan 30, the take-up reel table 5 is rotated by the drive motor 44 through the drive gear 43 and the gear 41 to take up the tape at a predetermined speed.

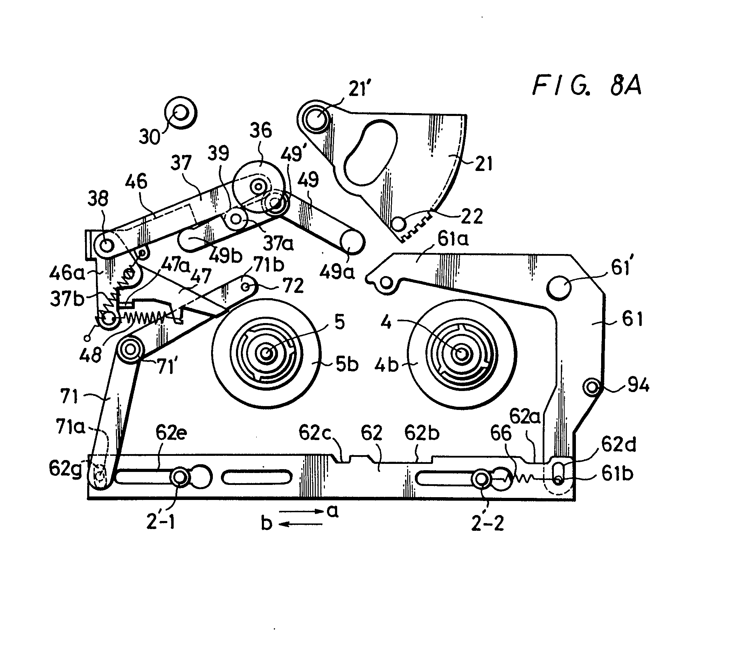

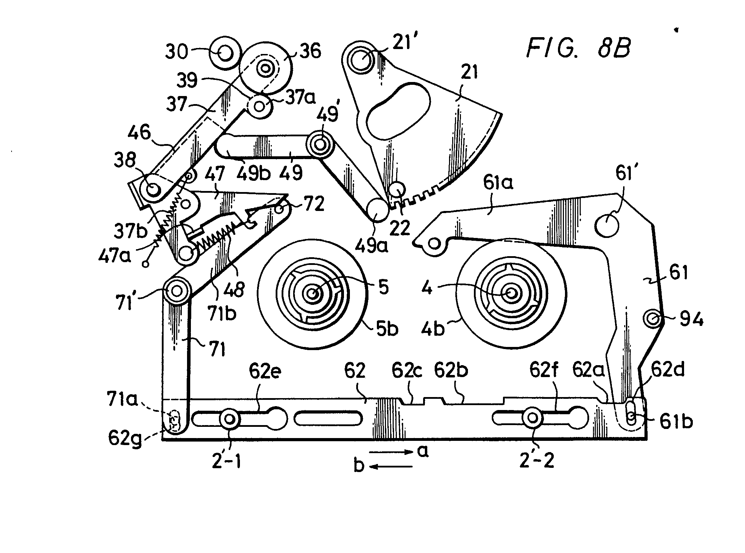

As shown in Figure 8A, the shaft 38 of the pinch roller arm 37 pivotably supports a rotary arm 46 on the opposite side of the base plate 2. The rotary arm 46 has a rotary member 46a protruded from its pivot portion. The rotary member 46a supports an engaging lever 47 to be rotatable only in one direction. A spring 48 is tensioned between the engaging lever 47 and the rotary member 46a to bias the engaging lever 47 in such a direction that the rotation member 46a can be engaged with an engaging member 47a of the lever 47 at all times. Between the rotary arm 46 and the sector shape gear 21, a lever 49 of substantially inverted V-shape is rotatably supported at its centre on the base plate 2. When the sector shape gear 21 rotates so as to move the tape guide post mounts 11 and 12 in the direction of the catchers 28, 29 of the guide grooves 15, 16 or upon loading, one end 49a of the lever 49 is pushed and hence the lever 49 is rotated. Thus, the other end 49b of the lever 49 pushes the rotary arm 46 so that the pinch roller arm 37 coaxial with the rotation arm 46 is rotated to move the pinch roller 36 towards the capstan 30, or move it to the set-up state.

As shown in Figure 2, at the front surface side of the base plate 2, a rotary arm 51 is supported to swing freely between the reel tables 4 and 5. As shown in Figure 3, the rotary arm 51 pivotably supports at its tip end a gear 52 which is engaged with the gear portion 5a of the take-up reel table 5. This gear 52 pivotably supports a gear 53 which is coaxial therewith at the lower surface side of the base plate 2 and a gear 54 is interposed between the gear 53 and the large diameter gear 23b of the intermediate gear 23, the rotation force of the intermediate-gear 23 being thus transmitted to the gear 52. When the intermediate gear 23 rotates so as to move the tape guide post mounts 11 and 12 in the loading direction, the rotation force of the intermediate gear 23 is transmitted through the gear 54 to the gears 53 and 52. Since this rotation is in such a direction as to urge the gear 52 to engage with the gear port 5a of the take-up reel table 5, the gear 52 is rotated around the pivot portion of the rotary arm 51 and moved toward the take-up reel table 5 thereby engaged with the gear portion 5a of the take-up reel table 5 so that it rotates the take-up reel table 5 in the reverse direction to the direction upon the normal speed forward and the fast forward modes thereby to draw out the tape upon loading. Thus, the tape can be protected from undesired tape tension.

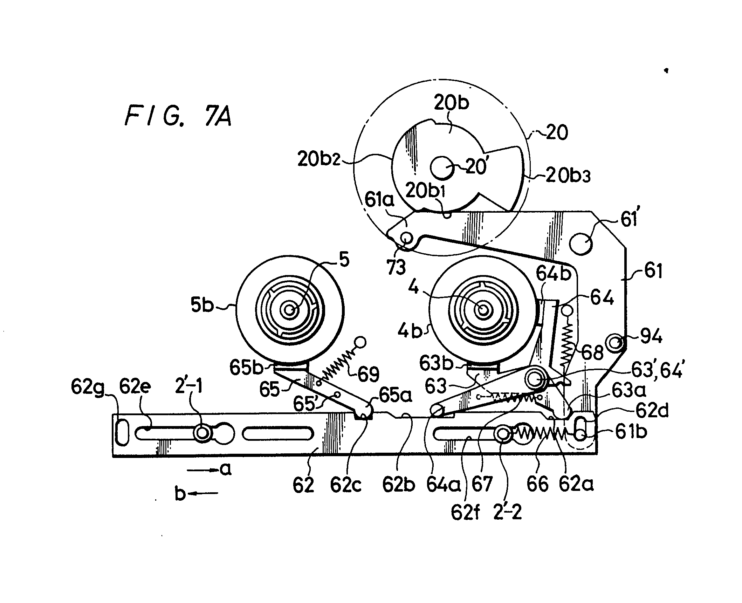

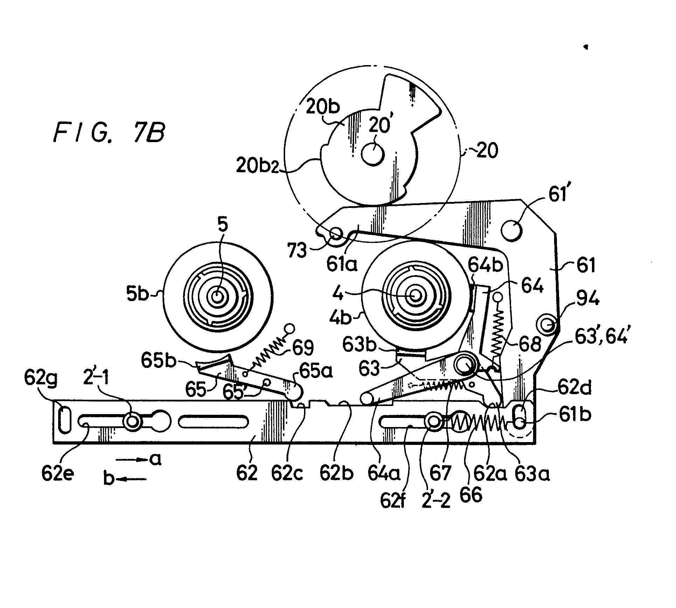

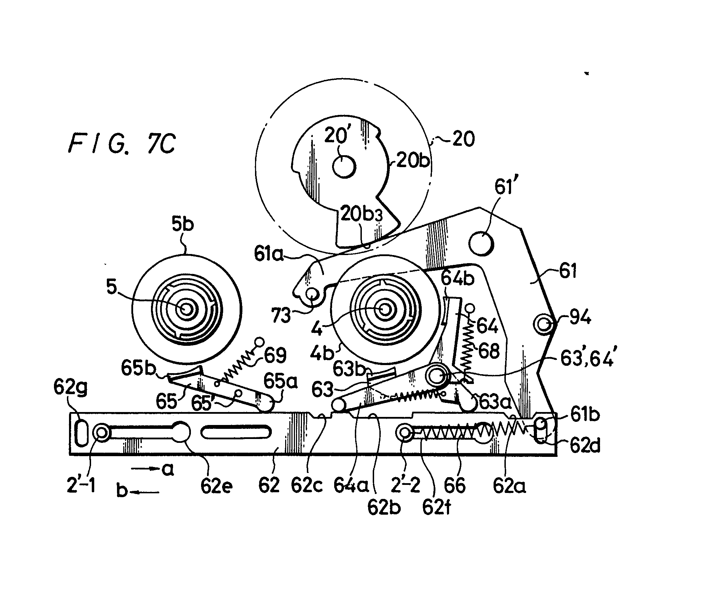

The reel brake mechanism is described with reference mainly to Figures 7A, 7B and 7C and, with reference to these Figures, it can be seen that on the sub-base plate 2', a mode lever 61 of L-shape is supported to be rotatable around its elbow 61'. The outer edge of one end 61a thereof contacts the peripheral surface of a cam portion 20b formed on the lower surface of the cam gear 20 and a pin 61b at the other end of the mode lever 61 engages in a slot 62d of a brake slider 62 which is provided on the sub-base plate 2' to be movable in the lateral direction by guide pins 2'-1, 2'-2 and slots 62e, 62f. The brake slider 62 has formed on its inner edge operation recesses 62a, 62b and 62c of brakes 63, 64 and 65 which are respectively supported on the sub-base plate 2' to be freely rotatable by shafts 63', 64' and 65'.

The brake 63 is the main brake for the supply reel table 4, the brake 64 is the soft brake for the supply reel table 4 and the brake 65 is the main brake for the take-up reel table 5, respectively. The brakes 63, 64 and 65 are all placed in the operation state in the unloading and stop modes. During the loading mode, the main brake 65 for the take-up reel table 5 is in its off-state and the main brake 63 and the soft brake 64 for the supply reel table 4 are respectively in their on-state, while in the tape supplying mode, each brake is placed in its off-state.

As shown in Figures 7A to 7C, the mode lever 61 cannot rotate when its end 61a contacts with a small diameter portion $20b_1$ of the cam portion 20b of the cam gear 20. The brake slider 62 is biassed in one direction (shown by an arrow b throughout Figures 7A to 7C) by a spring 66 and rear ends 63a, 64a and 65a of the brakes 63, 64 and 65 are respectively biassed by springs 67, 68 and 69 such that the rear ends 63a, 64a and 65a are engaged with the operation recesses 62a, 62b and 62c, respectively. Thus brake shoes 63b, 64b of the brakes 63, 64 are urged against a drum portion 4b of the supply reel table 4 and a brake shoe 65b of the brake 65 is urged against a drum portion 5b of the take-up reel table 5 so that the both reel tables 4 and 5 are in a stopped state (Figure 7A).

In the loading mode, when the cam gear 20 rotates so that an intermediate diameter portion $20b_2$ of the cam portion 20b contacts with the end 61a of the mode lever 61, the mode lever 61 rotates-slightly and the brake slider 62 slidably moves in the other direction (shown by an arrow a in Figures 7A to 7C) while resisting the spring force of the spring 66. As a result, the operation recess 62c disengages from the rear end 65a of the brake 65, or the brake 65 rotates against the spring force of the spring 69 with its rear end 65a running on the upper portion so that the brake shoe 65b disengages from the drum portion 5b of the take-up reel table 5. Thus only the take-up reel table 5 is released from its stop mode (Figure 7B) and tape loading is possible.

Thereafter, in the tape running mode, or the high speed mode of FF/REW or normal speed mode of FWD, when the cam gear 20 rotates so that a large diameter portion $20b_3$ of the cam portion 20b contacts with the end 61a of the mode lever 61, the mode lever 61 rotates considerably and hence the brake slider 62 moves considerably in the direction shown by the arrow a so that the operation recesses 62a and 62b disengage from the rear ends 63a and 64a of the brake 63 and the soft brake 64, or the rear ends 63a and 64a of the brake 63 and the soft brake 64 are lifted on the upper portion to be rotatable while resisting the spring force of the springs 67 and 68. As a result, the brake shoes 63b and 64b disengage from the drum portion 4b of the supply reel table 4 so that the supply reel table 4 is set free from its stopped state (Figure 7C) and thus the tape is permitted to run.

In this case, since the operation recess 62a of the brake slider 62 corresponding to the main brake 63 is narrower in width than the operation recess 62b corresponding to the soft brake 64, the main brake 63 is set free from the stop mode before the soft brake 64 is. In the stop operation mode, on the contrary, the soft brake 64 is set in the stop mode before the main brake 63 is. Accordingly, the supply reel table 4 is prevented from being set in the stop mode rapidly so that no undesired tape tension acts on the tape. On the other hand, the brake 65 of the take-up reel table 5 is the last to be set in the stop mode.

A control mechanism for the pinch roller will next be described with reference to Figures 8A to 8C.

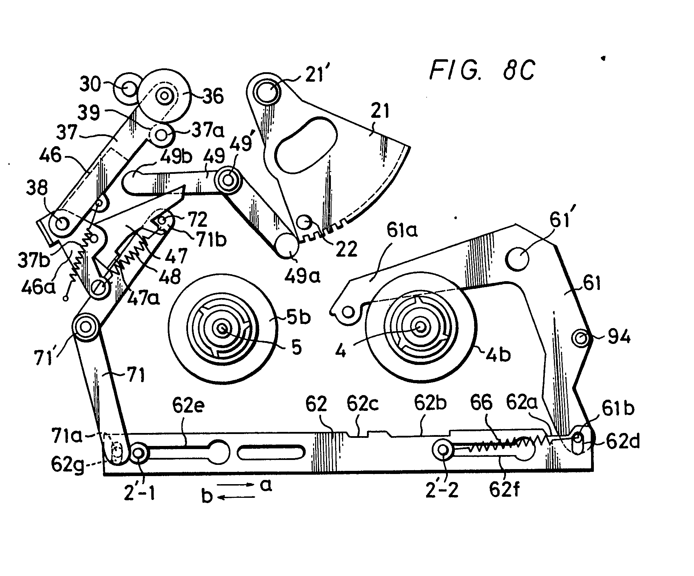

Referring to Figure 8A, into a slot 62g formed through the other end of the brake slider 6, there is engaged a pin 71a formed on one end of a lever 71 of V-shape which is supported at its central portion to the sub-base plate 2' to be rotatable by a shaft 71'. The lever 71 has a pin 72 protruding from its other end 71b. When the pinch roller arm 37 rotates to the set up state, or the rotation arm 46 is rotated by the lever 49 in accordance with the rotation of the sector shape gear 21, the engaging lever 47 is also rotated by the engaging member 47a while it is engaged with the rotation arm 46 through the engaging member 47a so that the pin 72 opposes the tip end of the lever 47. When the brake slider 62 moves in the direction shown by the arrow a, or carries out the stop-mode releasing operation so as to rotate the lever 71, the pin 72 contacts the rear edge of the tip end of the engaging lever 47 (Figure 8B). When the lever 71 is rotated further, the pin 72 pushes the engaging lever 47 so that the engaging lever 47 leaves the rotation arm 46 but the rotation arm 46 is pulled by the spring 48 to rotate the pinch roller arm 37 more so that the pinch roller 36 is urged against the capstan 30. That is, the normal tape speed mode is presented (Figure 8C).

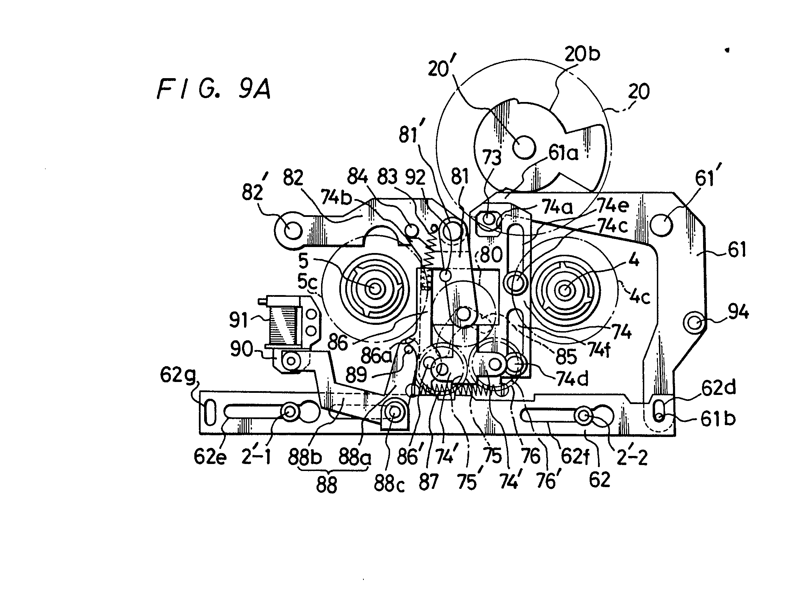

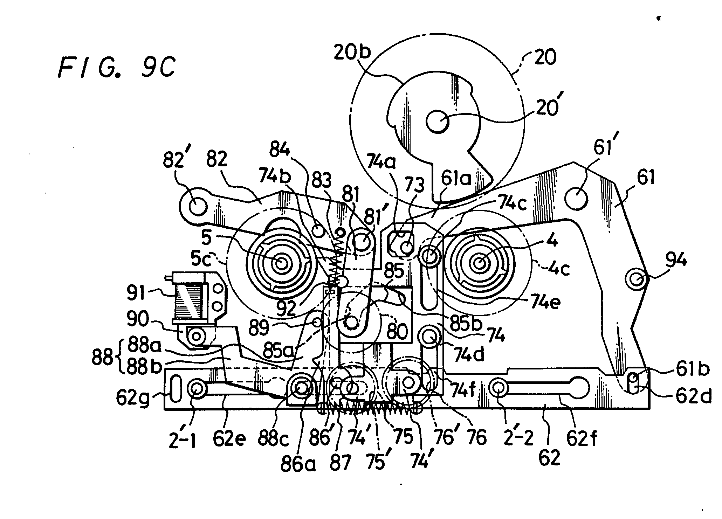

A fast forward/rewind mechanism is described with reference to Figures 9A to 9C.

Referring to Figure 9a, the mode lever 61 has a pin 73 at its end 61a and the pin 73 is engaged in a window opening 74a of an operating plate 74 which is slidable in the back and forth direction on engaging pins 74c, 74d on the sub-base plate 2' which engage in slots 74e, 74f formed in the plate-74. On the plate 74 gears 75 and 76 are pivotally supported to be engaged with each other through a support plate 74'. The gear 75 has a belt 78 stretched between it and a gear 77 (refer to Figure 4) pivotally supported on the sub-base plate 2' so that the rotation force from the gear 77 is transmitted to the gear 75. As a result, the other gear 76 rotates in the reverse direction at the same time. The gear 77 engages with a gear 79 which is rotated by the motor 44, so that the gear 77 receives the drive force of the motor 44.

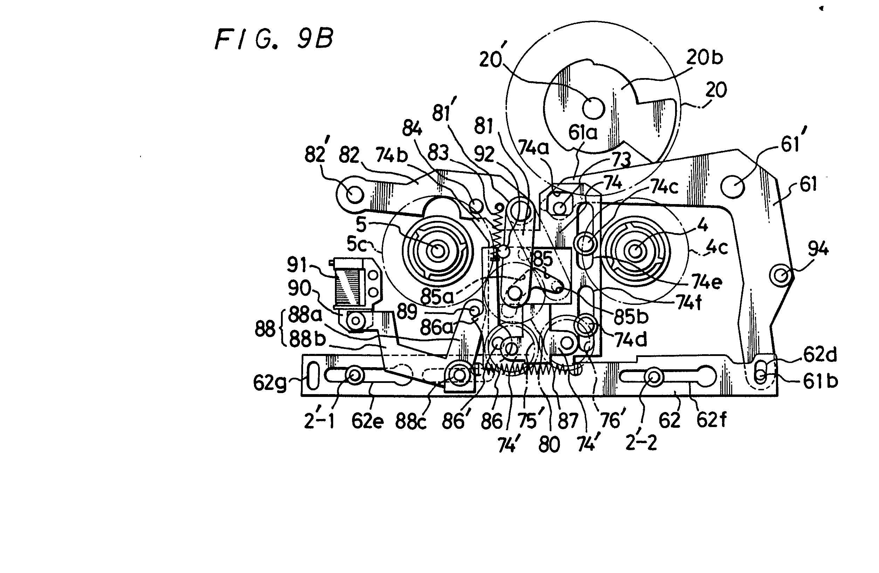

An arm 81 pivotally supports thereon a gear 80 which changeably engages with both of the small diameter gear 75' of the gear 75 and the fast forward gear portion 5c of the take-up reel table 5 and with both of the gear 76' of the other gear 76 and the rewind gear portion 4c of the supply reel table 4, separately. This arm 81 is coupled at a link 81' to the tip end of a lever 82 which is pivoted by a pin 82' to the sub-base plate 2' so as to be rotatable in the back and forth direction with a predetermined load by using a compressed coil spring. A spring 83 couples the lever 82 to the operating plate 74 and a protrusion 74b formed on the front edge of the plate 74 contacts with a pin 84 protruding from the lever 82. The free end of the arm 81 pivotally supported on the lever 82 engages with a guide groove 85 of substantially an L-shape formed through the sub-base plate 2' and swings right and left along the guide groove 85 when the plate 74 moves backward so that the gear 80 moves separately between the small diameter gear 75' and the gear portion 5c of the take-up reel table 5 or between the other small diameter gear 76' and the gear portion 4c of the take-up reel table 4 and engages either of them so as to transmit the rotation force to either the reel table 4 or 5. Further, when the plate 74 moves forward while the mode lever 61 is in its stop mode, the protrusion 74a contacts with the pin 84 of the lever 82 rotatably to support the lever 82 forward so that the free end of the arm 81 is in the apex of the guide groove 85, which causes the gear 80 to be freed from the gear portions 4c and 5c of both reel tables 4 and 5 as shown in Figure 9A (stop mode). An engaging member 86 is pivoted at one side portion of the plate 74 by a shaft 86' to be rotatable in the lateral direction. This engaging member 86 is biased to rotate by a spring 87 and is always kept perpendicular by a point pin 89 of a stopper lever 88 which is biased to rotate by a spring 88' (Figure 1) stretched between the guide pin 2'-l and the stopper lever 88. When the plate 74 is being lowered, an engaging protrusion 86a of the member 86 engages with the point pin 89 planted on one half portion 88a of the stopper lever 88 that is pivotally supported to the sub-base plate 2, at its central portion by a shaft 88c, whereby the plate 74 is held in its lowered state (see Figure 9B). More specifically, the stopper lever 88 has a member 90 attached to an end of the other half 88b thereof and this member 90 opposes a plunger 91 fixed to the sub-base plate 2'. When the plunger 91 is turned on, the plunger 91 attracts the member 90 to fix the stopper lever 88 so that the point pin 89 engages the engaging protrusion 86a of the engaging member 86 and the plate 74 is held in the moved state in the backward direction. In this operation, when the plunger 91 is not yet turned on, the stopper lever 88 becomes able to rotate freely so that as the mode lever 61 rotates, the backward movement of the plate 74 is performed in the vertical condition without rotating the engaging member 86. Under the state that the engaging protrusion 86a of the engaging member 86 moves over the point pin 89 of the stopper lever 88, if the plunger 91 is, turned on, the stopper lever 88 is fixed and the engaging protrusion 86a of the engaging member 86 engages with the point pin 89 thereby to engage the plate 74 in the backward position. As the plate 74 moves in the backward direction, the lever 82 is drawn to rotate backward through a spring 83 so that the arm 81 pivotally supported on this lever 82 with a predetermined load is moved backward so as to rotate around the shaft support portion of the lever 82. Thus the arm 81 is moved along one side 85a of the inverted V-shape groove 85, or it is swung in the direction to the take-up reel table 5 (the state shown by a solid line in Figure 9B) whereby the gear 80 engages with the gear portion 75' thereby to transmit the drive force of the drive motor 44 to the take-up reel table 5. In this case, by the rotation of the mode lever 61, the brake slider 62 moves slidably to release the brakes 63, 64 and 65 for the reel tables 4 and 5 so that the tape is permitted to run in the fast forward (FF) mode, etc.

If under this state the plunger 91 is turned off, the stopper lever 88 becomes able to rotate freely thereby to release the engagement of the plate 74 so that it is returned. Accordingly, the gear 80 disengages from the gear portion 5c of the take-up reel table 5 so that the reel table 5 is changed from the tape transport mode to the stop mode. In this case, since the mode lever 61 is returned to its original condition, both reel tables 4 and 5 are braked and thus the apparatus is placed in the stop mode on the whole.

On the other hand, in the rewind (REW) mode, the plunger 91 is turned on in the beginning and the same operation as the afore-mentioned tape transport mode is carried out. In this case, since the plunger 91 is turned on, the stopper lever 88 is fixed. If under this state the plate 73 is slidably moved backward, the engaging protrusion 86a of the engaging member 86 contacts with the point pin 89 of the stopper lever 88 so that the engaging member 8 is rotated on the upper surface side of the plate 74 against the spring force of the spring 87 and then contacts with a pin 92 protruded on the side portion of the arm 81. Thus, the engaging member 86 pushes the arm 81 in the direction to the supply reel table 4 thereby to move the arm 81 along the other side groove portion 85b of the guide groove 85 (shown by a two-dot chain line in Figure 9B) whereby the gear 80 engages with the other small diameter gear 76' and the gear portion 4c of the supply reel table 4 so as to transmit the drive force of the drive motor 44 through the gear 80, the small diameter gears 75' and 76' to the supply reel table 4, thus rotating the supply reel table 4 in the rewind mode. Also in this case, the plate 74 is locked by engaging the engaging protrusion 86a of the engaging member 86 with the point pin 89 of the stopper lever 88 which is in the fixed state and hence the supply reel table 4 is kept rotating in the rewind mode.

In the tape normal speed transport mode, the mode lever 61 is rotated largely by the cam portion 20b of the cam gear 20 thereby to move the plate 74 to its rearmost position. In this case, since the arm 81 engages with the rear end portion of the guide groove 85 and does not follow the movement of the plate 74, the gear 80 pivoted at the tip end portion of the arm 81 disengages from the gears 4c, 5c of the reel tables 4, 5 and the gears 75, 76 whereby no drive force of the drive motor 44 is transmitted to the reel tables 4 and 5, and the gear 80 does not act as a load for the normal tape speed rotation of the reel tables 4 and 5.

Further, as shown in Figure 4, a rotation lever 93 is pivotally supported on the sub-base plate 2' at the side of the mode lever 61 and this lever 93 always engages with a pin 94 protruding from the mode lever 61 due to the biasing force of a spring 95. The rotation lever 93 has a pin 96 protruding at its tip end. This pin 96 protrudes through a guide slot 97 formed through the base plate 2 to the surface side thereof and opposes the outer edge of the tension arm 31 as shown in Figure 2. When the mode lever 61 rotates, the rotation lever 93 is pushed to rotate through the pin 94 and the pin 96 moves to the outer end of the guide slot 97 while as the mode lever 61 rotates and returns to its original position, the rotation lever 93 is rotated to return to the original position by the biasing force of the spring 95. In that case, the pin 96 pushes the outer edge of the tension arm 31 to rotate the tension arm 31 whereby the tip end portion of the tension arm 31 disengages from the tape guide post mount 11. In other words, since the tension arm 31 is rotated by the pin 96, the tip end portion of the tension arm 31 is positioned rearwardly of the tape guide post mount 11. Accordingly, as the tape guide post mount 11 is moved in its returning direction, the tension arm 31 is rotated and returned to the original condition against the spring force of the spring 32.

## Claims

1. Magnetic recording and/or reproducing apparatus comprising:

(a) a magnetic head assembly having a magnetic head (3) for recording a signal on a magnetic tape or reproducing it therefrom;

(b) tape guide means (7 to 10) provided freely to move between a non-operation position within a tape cassette and an operation position to draw out magnetic tape from the tape cassette at the non-operation position and to form a predetermined tape path relative to the magnetic head assembly;

(c) loading means (6) engaging with the tape guide means (7 to 10) and to move the tape guide means (7 to 10);

(d) a supply reel table (4) to support and rotate a reel which supplies the magnetic tape;

(e) a take-up reel table (5) to support and rotate a reel which takes up the magnetic tape;

(f) brake means (63, 64, 65) provided freely to contact or release the supply reel table (4) and the take-up reel table (5), the brake means (63, 64, 65) comprising pivoted levers formed with contact portions (63b, 64b, 65b) provided at one of the ends thereof which freely contact with or leave the reel tables (4, 5);

(g) brake control means including a brake control slider (62) to control the brake means (63, 64, 65);

(h) a motor(18);

(i) capstan means (30) to transport the magnetic tape at a constant tape speed, pinch roller support means (37) rotatably supported on the chassis and to support a pinch roller (36), and pinch roller control means (40) to control the pinch roller support means (37) such that the pinch roller (36) is urged against or released from being urged against the capstan means (30);

(j) a cam gear (20) having a first cam portion (20a) and a second cam portion (20b), the gear means (20) being rotated by the drive force of the motor (18), the loading means (6) being driven by the first cam portion (20a) thereby to move the tape guide means (7 to 10) and the brake control means (61, 62) being driven by the second cam portion (20b) thereby to control the brake means (63, 64, 65) to contact or release the reel tables (4, 5), thereby to determine at least a stop mode, a tape loading mode, a tape unloading mode, a high speed fast forward/rewind mode and a normal tape speed forward mode; and

(k) a rotatable mode setting lever (61) of L-shape pivoted at its elbow one end (61a) of the mode setting lever (61) engaging the second cam portion (20b) and being moved by the second cam portion (20b) and the other end (61b) of the mode setting lever (61) engaging and controlling the brake slider (62) so as to set a predetermined one of the modes, the brake control slider (62) being controlled so as slidably to move such that when the stop mode is set by the cam gear (20), both of the brake means (63, 64, 65) are urged against the supply reel table (4) and the take-up reel table (5), and when the high speed tape fast forward/rewind mode or normal tape speed forward mode is set by the cam gear (20), both of the brake means release both reel tables (4, 5);

characterised in that control portions (63a, 64a, 65a) are provided at the other of the ends of the pivoted levers forming the brake means (63, 64, 65) and can engage with the brake control slider (62); the brake means (63, 64, 65) are supported on a sub-chassis freely to rotate; and, when tape loading mode is set by the cam gear (20), one of the brake means is urged against either of the reel tables (4, 5) and the other brake means releases the other of the reel tables.

2. Magnetic recording and/or reproducing apparatus according to claim 1, in which the loading means (6) comprise a first arm (13a, 14a) to engage with the tape guide means (7 to 10), a second arm (13b, 14b) to engage with the first arm (13a, 14a) in a link connection fashion, first and second rotation members (24, 25) for rotating the second arm (13b, 14b) and a third rotation member (23) provided between said first and second rotation members (24, 25) wherein said third rotation member (23) is rotated by the first cam portion (20a) of the cam gear (20), the tape guide means (7 to 10) move along guide grooves (15, 16) formed through a chassis (2) and at least one (16) of the guide grooves has, at its portion near said non-operation position within said tape cassette, the form of an arc which is centered around a rotation axis of said first or second rotation member.

3. Magnetic recording and/or reproducing apparatus according to claim 2, in which between the third rotation member (23) and the cam gear (20), there is provided a fourth rotation member (21) which has a tooth portion to engage with the third rotation member (23) and a pin (22) to engage with the first cam portion (20a) and the rotation force of the first cam portion (20a) is transmitted through said fourth rotation member (21) to the third rotation member (23).

4. Magnetic recording and/or reproducing apparatus according to any one of claims 1 to 3, in which the brake control means are provided with a concave or convex portion and the brake control means is controlled to engage or release both reel tables (4, 5) by slidably moving the concave or convex portion having a difference in level of said portion.

5. Magnetic recording and/or reproducing apparatus according to claim 1, further comprising soft brake means (64) which can freely engage or release the supply reel table (4) or take-up reel table (5), the soft brake means (64) having an engagement force smaller than those of the brake means (63, 65) and being controlled by the brake control slider (62).

6. Magnetic recording and/or reproducing apparatus according to claim 1, in which the pinch roller control means (47, 71) engages at one of its ends with the brake control slider (62) and at the other of its ends with said pinch roller support means (37) and is rotatably supported on said sub-chassis.

7. Magnetic recording and/or reproducing apparatus according to any one of claims 1 to 6, further comprising second pinch roller control means for moving the pinch roller support means (37) between a first position near the capstan means (30) and a second position remote therefrom in co-operation with said first cam portion (20a).

8. Magnetic recording and/or reproducing apparatus according to claim 7 when appendant to claim 3, in which the second pinch roller control means is driven by the fourth rotation member (21) during a period in which the loading means (6) are being driven.

9. Magnetic recording and/or reproducing apparatus according to any one of claims 1 to 8, further comprising:

a slide plate (74) slidably moving at least between first and second positions in accordance with the movement of the mode setting means (61) and rotatably supporting fifth and sixth rotary members (75, 76) which are engaged with each other;

support levers (81, 82) for rotatably supporting a seventh rotation member (80) and following the operation of said slide plate (74) so as selectively to set the seventh rotation member (80) between a third position interposed between the supply reel table (4) and the fifth rotation member (75) and a fourth position interposed between the take-up reel table (5) and the sixth rotation member(76);

engaging means (88) being selectively set in inoperative state or freely movable state in accordance with operation of electromagnetic means (91); and

switching lever means (86) movably supported on the slide (74) plate, engaged with the engaging means (88) and for selectively setting the support lever means (81, 82) at said third or fourth position in accordance with a slide operation of the slide plate (74) and a state in which said engaging means (86) is set;

wherein the engaging means (88) is set in a freely movable state by the electromagnetic means (91), the slide plate (74) is slidably moved from the first position to the second position by the mode setting lever (61) so that the engaging means (88) is moved by the switching lever means (86) thereby to set the seventh rotation member (80) at said third position, while the engaging means (88) is set in said inoperative state by said electromagnetic means (91) and the slide plate (74) is slidably moved from said first position to said second position by said mode setting lever (61) so that said engaging means is moved by said support lever means (81, 82) through said switching lever means thereby to set said seventh rotation member (80) at said fourth position.

10. Magnetic recording and/or reproducing apparatus according to claim 9, in which the support lever means (81, 82) are rotatably supported to said chassis and are formed by a first lever (82) coupled through a spring (83) to the slide plate (74) and a second lever (81) one end of which is link-connected to the first lever (82) to have a predetermined rotation load and the other end of which rotatably supports the seventh rotation member (80).

11. Magnetic recording and/or reproducing apparatus according to claim 9, in which the switching lever means (86) has a protrusion (86a) formed at a position such that when the engaging means (88) is set in a movable state, the protrusion (86a) urges the slide plate (74) slidably to move so as to move said engaging means (88), while when said engaging means is set in said inoperative state, said protrusion (86) displaces said switching lever means in accordance with the slide movement of said slide plate.

12. Magnetic recording and/or reproducing apparatus according to claim 9 or claim 11, in which the engaging means (88) is formed of a rotatable lever one end of which can be engaged with said electromagnetic means (91) and the other end of which engages at least with said protrusion (86a) of said switching lever means (86).

13. Magnetic recording and/or reproducing apparatus according to claim 11, in which when the said slide plate (74) is placed at said second position, the said electromagnetic means (91) puts the engaging means (88) into said inoperative state thereby supportably to lock the slide plate (74) at said second position through said protrusion (86a).

14. Magnetic recording and/or reproducing apparatus according to claim 12, further comprising guide grooves (85) of substantially L-shape formed through said chassis and for respectively introducing a support shaft of said seventh rotation member (80) into said third or fourth position in accordance with movement of the support lever means (81, 82).

15. Magnetic recording and/or reproducing apparatus according to claim 9, in which said first position is a stop mode position, said second position is a fast forward (FF) or rewind (REW) position, said third position is fast forward (FF) position, and said fourth position is a rewind (REW) position.

## Patentansprüche

1. Magnetisches Aufzeichnungs- und/oder Wiedergabegerät mit

(a) einer Magnetkopfanordnung mit einem Magnetkopf (3) zur Aufnahme eines Signals auf einem Magnetband oder zur Wiedergabe des Signals von dem Magnetband,

(b) Bandführungsmitteln (7 bis 10), die zwischen einer inaktiven Stellung in einer Bandkassette und einer Arbeitsstellung bewegbar sind, um Magnetband aus der Bandkassette in der inaktiven Stellung herauszuziehen und relativ zu der Magnetkopfanordnung einen vorbestimmten Bandführungsweg auszubilden,

(c) einer Ladevorrichtung (6) zum Bewegung der Bandführungsmittel (7 bis 10), die an den Bandführungsmitteln (7 bis 10) angreift,

(d) einem Vorratsspulen-Wickeldorn (4) zur Lagerung und zum Drehen einer Spule, von der das Magnetband abgewickelt wird,

(e) einem Aufwickelspulen-Wickeldorn (5) zur Lagerung und zum Drehen einer Spule, auf die das Magnetband aufgewickelt wird,

(f) Bremsmitteln (63, 64, 65), die derart bewegbar sind, daß sie den Vorratsspulen-Wickeldorn (4) und den Aufwickelspulen-Wickeldorn (5) berühren oder freigeben, wobei diese Bremsmittel (63, 64, 65) Schwenkhebel aufweisen, die an einem Ende mit Kontaktteilen (63b, 64b, 65b) versehen sind, die mit den Spulen-Wickeldornen (4, 5) in Kontakt stehen oder von ihnen gelöst sind,

(g) Bremsbetätigungsmitteln mit einem Bremssteuerschieber (62) zur Betätigung der Bremsmittel (63, 64, 65),

(h) einem Motor (18),

(i) einem Capstan (30) zum Transportieren des Magnetbandes mit einer konstanten Bandgeschwindigkeit, einem Andruckrollenträger (37), der an dem Chassis des Geräts drehbar gelagert ist und eine Andruckrolle (36) trägt, einer Andruckrollensteuereinrichtung (40) zur Steuerung des Andruckrollenträgers (37) in der Weise, daß die Andruckrolle (36) gegen den Capstan (30) gedrückt oder von ihm gelöst ist,

(j) einem von dem Motor (18) drehbaren Nockenzahnrad (20) mit einem ersten Nockenabschnitt (20a) und einem zweiten Nockenabschnitt (20b), wobei der erste Nockenabschnitt (20a) den Antrieb der genannten Ladevorrichtung (6) und damit die Bewegung der Bandführungsmittel (7 bis 10) und der zweite Nockenabschnitt (20b) den Antrieb der Bremsbetätigungsmittel (61, 62) und damit die Steuerung der Bremsmittel (63, 64, 65) bewirkt, derart daß diese die Spulen-Wickeldorne (4, 5) entweder berühren oder freigeben, wodurch wenigstens eine Betriebsart "Stoppen", eine Betriebsart "Laden des Bandes", eine Betriebsart "Entladen des Bandes", eine Betriebsart "schneller Vorwärts/Rückwärtslauf" und eine Betriebsart "Vorwärtslauf mit normaler Geschwindigkeit" bestimmt werden, und

(k) einem drehbaren, L-förmigen Betriebsart-Einstellhebel (61), der an seiner Kniestelle gelenkig gelagert ist und der mit einem Endbereich (61a) mit dem zweiten Nockenabschnitt (20b) in Eingriff steht und von diesen bewegbar ist, während der andere Endbereich (61b) des Betriebsart-Einstellhebels (61) an dem Bremssteuerschieber (62) angreift und diesen zur Einstellung einer vorbestimmten Betriebsart veranlaßt, wobei der Bremssteuerschieber (62) in der Weise gesteuert wird, daß er eine Gleitbewegung ausführt, durch welche beide Bremsmittel (63, 64, 65) gegen den Vorratsspulen-Wickeldorn (4) und den Aufwickelspulen Wickeldorn (5) gedrückt werden, wenn das Nockenzahnrad (20) die Betriebsart "Stoppen" einstellt, und beide Bremsmittel von beiden Spulen-Wickeldornen (4, 5) gelöst werden, wenn durch das Nockenzahnrad (20) die Betriebsart "schneller Vorwärts/Rückwärtslauf" oder die Betriebsart "Vorwärtslauf mit normaler Geschwindigkeit" eingestellt wird,

dadurch gekennzeichnet,

daß die anderen Endbereichen der die Bremsmittel (63, 64, 65) bildenden Schwenkhebel mit Steuerabschnitten (63a, 64a, 65a) ausgestattet sind, die mit dem Bremssteuerschieber (62) in Eingriff gelangen können,

daß die Bremsmittel (63, 64, 65) an einem Subchassis frei drehbar gelagert sind,

und daß eines der Bremsmittel gegen einen der Spulen Wickeldorne (4, 5) gedrückt ist und das andere Bremsmittel den anderen Spulen-Wickeldorn freigibt, wenn von dem Nockenzahnrad (20) die Betriebsart "Laden des Bandes" eingestellt ist.

2. Magnetisches Aufzeichnungs- und/oder Wiedergabegerät nach Anspruch 1, bei dem die Ladevorrichtung (6) einen ersten Arm (13a, 14a) für den Eingriff mit den Bandführungsmitteln (7 bis 10) aufweist, ferner einen zweiten Arm (13b, 14b) für den Eingriff mit dem ersten Arm (13a, 14a) nach Art einer Gelenkverbindung, ein erstes und ein zweites Drehglied (24, 26) zum Drehen des zweiten Arms (13b, 14b) und ein drittes Drehglied (23), das zwischen dem ersten und dem zweiten Drehglied (24, 25) angeordnet ist, wobei das dritte Drehglied (23) von dem ersten Nockenabschnitt (20a) des Nockenzahnrads (20) gedreht wird, und wobei die Bandführungsmittel (7 bis 10) sich in Führungsnuten (15, 16) bewegen, die durch ein Chassis (2) dringen und von denen wenigsten eine (16) in ihrem in der Nähe der inaktiven Stellung in der Bandkassette die Form eines Bogens hat, der um die Drehachse des ersten oder zweiten Drehglieds zentriert ist.

3. Magnetisches Aufzeichnungs- und/oder Wiedergabegerät nach Anspruch 2, bei dem zwischen dem dritten Drehglied (23) und dem Nockenzahnrad (20) ein viertes Drehglied (21) vorgesehen ist, das einen mit dem dritten Drehglied (21) in Eingriff stehenden Verzahnungsabschnitt sowie einen Stift (22) besitzt, der mit dem ersten Nokkenabschnitt (20a) in Eingriff steht, so daß die Drehkraft des ersten Nockenabschnitts (20a) über dieses vierte Drehglied (21) auf das dritte Drehglied (22) übertragen wird.

4. Magnetisches Aufzeichnungs- und/oder Wiedergabegerät nach einem der Ansprüche 1 bis 3, bei dem die Bremsbetätigungsmittel einen konkaven oder konvexen Abschnitt besitzen und bei dem die Betätigung der Bremsbetätigungsmittel ein Festhalten oder Lösen der beiden Spulen-Wickeldorne (4, 5) durch eine Verschiebung des konkaven oder konvexen Abschnitts bewirkt, die in diesem Bereich eine Höhendifferenz haben.

5. Magnetisches Aufzeichnungs- und/oder Wiedergabegerät nach Anspruch 1, bei dem ferner weiche Bremsmittel (64) vorgesehen sind, die den Vorratsspulen-Wickeldorn (4) oder den Aufwickelspulen-Wickeldorn (5) festhalten oder loslassen können, deren Haltekraft kleiner ist als diejenige der Bremsmittel (63, 65) und die durch den Bremssteuerschieber (62) betätigt werden.

6. Magnetisches Aufzeichnungs- und/oder Wiedergabegerät nach Anspruch 1, bei dem die Andruckrollensteuereinrichtung (47, 71) mit einem ihrer Enden an dem Bremssteuerschieber (62) und mit dem anderen Ende an dem Andruckrollenträger (37) angreift und an dem Subchassis drehbar gelagert ist.

7. Magnetisches Aufzeichnungs- und/oder Wiedergabegerät nach einem der Ansprüche 1 bis 6, ferner mit mit einer zweiten Andruckrollensteuereinrichtung, die die Andruckrollenträger (37) in Zusammenwirken mit dem ersten Nockenabschnitt (20a) zwischen einer ersten Position in der Nähe des Capstans (30) und einer von dieser Position entfernten zweiten Position bewegt.

8. Magnetisches Aufzeichnungs- und/oder Wiedergabegerät nach Anspruch 7 in Verbindung mit Anspruch 3, bei dem die zweite Andruckrollensteuereinrichtung während der Zeit, in der die Ladevorrichtung (6) angetrieben wird, von dem vierten Drehglied (21) angetrieben wird.

9. Magnetisches Aufzeichnungs- und/oder Wiedergabegerät nach nach einem der Ansprüche 1 bis 8, bei dem folgende weitere Teile vorgesehen sind:

eine Gleitplatte (74), die in Abhängigkeit von der Bewegung des Betriebsart-Einstellhebel (61) zumindest zwischen einer ersten und einer zweiten Position verschiebbar ist und auf der ein fünftes und ein sechstes Drehglied (75, 76) drehbar gelagert sind, die miteinander in Eingriff stehen,

eine Lagerungshebelanordnung (81, 82) zur drehbaren Lagerung eines siebten Drehglieds (80), die der Bewegung der Gleitplatte (74) in der Weise folgt, daß sie das siebte Drehglied (80) wahlweise zwischen einer dritten Position, die zwischen dem Vorratsspulen-Wickeldorn (4) und dem fünften Drehglied (75) liegt, und einer vierten Position einstellt, die zwischen dem Aufwickelspulen-Wickeldorn (5) und dem sechsten Drehglied (76) liegt,

Kupplungsmittel (88), die sich nach Maßgabe der Betätigung einer elektromagnetischen Betätigungsvorrichtung (91) wahlweise in einen inaktiven Zustand oder einen frei beweglichen Zustand einstellen lassen,

und eine auf der Gleitplatte beweglich angeordnete Schalthebelanordnung (86), die mit den Kupplungsmitteln (88) in Eingriff steht, um die Lagerungshebel (81, 82) in Abhängigkeit von einer Verschiebungsbewegung der Gleitplatte (74) und von dem Zustand, auf den die Kupplungsmitteln (88) eingestellt sind, wahlweise in die dritte oder vierte Position zu führen,

wobei die Kupplungsmittel (88) durch die elektromagnetische Betätigungsvorrichtung (91) in einen frei beweglichen Zustand geführt werden, die Gleitplatte (74) von dem Betriebsart-Einstellhebel (61) aus der ersten in die zweite Position verschoben wird, so daß die Kupplungsmittel (88) von der Schalthebelanordnung (86) bewegt wird, wodurch das siebte Drehglied (80) in die genannte dritte Position geführt wird, während die Kupplungsmittel (88) von der elektromagnetischen Betätigungsvorrichtung (91) in den genannten inaktiven Zustand geführt werden und die Gleitplatte (74) von dem Betriebsart-Einstellhebel (61) aus der ersten in die zweite Position verschoben wird, so daß die Kupplungsmittel (88) von der Lagerungshebelanordnung (81, 82) über die Schalthebelanordnung so bewegt werden, daß das siebte Drehglied (80) in die vierte Position geführt wird.

10. Magnetisches Aufzeichnungs- und/oder Wiedergabegerät nach Anspruch 9, bei dem die Lagerungshebelanordnung (81, 82) auf dem Chassis drehbar gelagert ist und aus einem ersten Hebel (82), der über eine Feder (83) mit der Gleitplatte (74) verbunden ist, und einem zweiten Hebel (81) besteht, der mit einem Endbereich derart gelenkig mit dem ersten Hebel (82) verbunden ist, daß er eine vorbestimmte Drehbelastung besitzt, und in dessen anderem Endbereich das siebte Drehglied (80) drehbar gelagert ist.

11. Magnetisches Aufzeichnungs- und/oder Wiedergabegerät nach Anspruch 9, bei dem die Schalthebelanordnung (86) einen Vorsprung (86a) besitzt, der in einer solchen Position angeordnet ist, daß er dann, wenn die Kupplungsmittel (88) sich in ihrem beweglichen Zustand befinden, so gegen die Gleitplatte (74) drückt, daß diese eine Gleitbewegung ausführt, durch die die Kupplungsmittel (88) bewegt werden, während der Ansatz (86a) dann, wenn die Kupplungsmittel (88) sich in ihrem inaktiven Zustand befinden, die Schalthebelanordnung nach Maßgabe der Gleitbewegung der Gleitplatte (74) verschiebt.

12. Magnetisches Aufzeichnungs- und/oder Wiedergabegerät nach Anspruch 8 oder 9, bei dem die Kupplungsmittel (88) aus einem drehbaren Hebel bestehen, der mit einem Ende mit der elektromagnetischen Betätigungsvorrichtung (91) in Eingriff bringbar ist und dessen anderes Ende zumindest mit dem Ansatz (86a) der Schalthebelanordnung (86) in Eingriff steht.

13. Magnetisches Aufzeichnungs- und/oder Wiedergabegerät nach Anspruch 11, bei dem die elektromagnetische Betätigungsvorrichtung (91) die Kupplungsmittel (88) in den inaktiven Zustand führt und dadurch die Gleitplatte (74) durch den Ansatz (86a) in dem inaktiven Zustand blockiert, wenn diese (74) sich in der zweiten Position befindet.

14. Magnetisches Aufzeichnungs- und/oder Wiedergabegerät nach Anspruch 12, bei dem ferner im wesentlichen L-förmige Nuten (85) vorgesehen sind, die durch das Chassis dringen und die dazu dienen, die Lagerwelle des siebten Drehglieds (80) in Abhängigkeit von der Bewegung der Lagerungshebelanordnung (81, 82) in die dritte oder vierte Position zu führen.

15. Magnetisches Aufzeichnungs- und/oder Wiedergabegerät nach Anspruch 9, bei dem die erste Position eine Stopp-Position, die zweite Position eine Position für schnellen Vorlauf (FF) oder Rücklauf (REW), die dritte Position eine Position für schnellen Vorlauf (FF) und die vierte Position eine Position für Rücklauf (REW) ist.

**Revendications**

1. Appareil d'enregistrement et/ou de restitution magnétique, comprenant:

(a) un ensemble à tête magnétique ayant une tête magnétique (3) d'enregistrement d'un signal sur une bande magnétique ou de lecture d'un signal sur une telle bande,

(b) des dispositifs (7 à 10) de guidage de bande disposés afin qu'ils se déplacent entre une position de non-fonctionnement à l'intérieur d'une cassette de bande et une position de travail en extrayant une bande magnétique de la cassette de la position de non-fonctionnement et en formant un trajet prédéterminé de bande par rapport à l'ensemble à tête,

(c) un dispositif de chargement (6) qui coopère avec les dispositifs de guidage de bande (7 à 10) et qui déplace ces dispositifs de guidage (7 à 10),

(d) une table (4) à bobine débitrice destinée à supporter et faire tourner une bobine qui transmet la bande magnétique,

(e) une table (5) à bobine réceptrice destinée à supporter et faire tourner une bobine qui prélève la bande magnétique,

(f) des dispositifs de freinage (63, 64, 65) destinés à être au contact de la table (4) à bobine débitrice et de la table (5) à bobine réceptrice et à s'en séparer, les dispositifs de freinage (63, 64, 65) comprenant des leviers articulés ayant des parties de contact (63b, 64b, 65b) placées à l'une de leurs extrémités et qui sont en contact avec les tables (4, 5) ou sont séparées de celles-ci,

(g) un dispositif de commande de freinage comprenant un coulisseau (62) destiné à commander les dispositifs de freinage (63, 64, 65),

(h) un moteur (18),

(i) un dispositif à cabestan (30) destiné à transporter la bande magnétique à une vitesse constante, un dispositif (37) de support de galet de pincement supporté sur le châssis afin qu'il puisse tourner et destiné à porter un galet de pincement (36), et un dispositif (40) de commande de galet de pincement qui est destiné à commander le dispositif de support (37) du galet de pincement afin que le galet de pincement (36) soit repoussé contre le dispositif à cabestan (30) ou ne soit plus repoussé contre celui-ci,

(j) un pignon à came (20) ayant une première partie de came (20a) et une seconde partie de came (20b), le pignon (20) étant entraîné en rotation par la force du moteur (18), le dispositif de chargement (6) étant entraîné par la première partie de came (20a) afin que les dispositifs de guidage de bande (7 à 10) soient déplacés et le dispositif de commande de freinage (61, 62) étant entraîné par la seconde partie de came (20b) afin que les dispositifs de freinage (63, 64, 65) soient commandés et viennent au contact des tables (4, 5) ou s'en séparent, si bien qu'un mode d'arrêt, un mode de chargement de bande, un mode de déchargement de bande, un mode d'avance rapide-réenroulement à grande vitesse et un mode d'avance de bande à vitesse normale au moins sont déterminés, et

(k) un levier rotatif (61) de réglage de mode ayant une forme en L, articulé à sa partie coudée, une première extrémité (61a) du levier (61) étant au contact de la seconde partie de came (20b) et étant déplacée par la seconde partie de came (20b) et l'autre extrémité (61b) du levier (61) de réglage de mode étant au contact du coulisseau de freinage (62) et commandant celui-ci afin que l'un des modes prédéterminés soit établi, le coulisseau (62) de commande de freinage étant commandé afin qu'il coulisse d'une manière telle que, lorsque le mode d'arrêt est déterminé par le pignon à came (20), tous les dispositifs de freinage (63, 64, 65) sont repoussés contre la table (4) à bobine débitrice et la table (5) à bobine réceptrice et que, lorsque le mode d'avance rapide-réenroulement à grande vitesse ou le mode d'avance de bande à vitesse normale est réglé par le pignon à came (20), tous les dispositifs de freinage se séparent des deux tables (4, 5),

caractérisé en ce que des parties de commande (63a, 64a, 65a) sont formées aux autres extrémités des leviers articulés formant les dispositifs de freinage (63, 64, 65) et peuvent être au contact du coulisseau de commande de freinage (62), les dispositifs de freinage (63, 64, 65) sont supportés par un sous-châssis qui est destiné à tourner, et, lorsque le mode de chargement de bande est fixé par le pignon à came (20), l'un des dispositifs de freinage est repoussé contre l'une des tables (4, 5) et un autre dispositif de freinage libère l'autre des tables.

2. Appareil d'enregistrement et/ou de restitution magnétique selon la revendication 1, dans lequel le dispositif de chargement (6) comporte un premier bras (13a, 14a) destiné à être au contact des dispositifs de guidage de bande (7 à 10), un second bras (13b, 14b) destiné à être au contact du premier bras (13a, 14a) par l'intermédiaire d'un accouplement, un premier et un second organe rotatif (24, 25) destiné à faire tourner le second bras (13b, 14b) et un troisième organe rotatif (23) placé entre le premier et le second organe rotatif (24, 25), le troisième organe rotatif (23) étant entraîné en rotation par la première partie de came (20a) du pignon à came (20), les dispositifs de guidage de bande (7 à 10) se déplaçant le long des gorges de guidage (15, 16) formées dans un châssis (2), et l'une au moins (16) des gorges de guidage a, dans sa partie proche de la position de non-fonctionnement à l'intérieur de la cassette de bande, la forme d'un arc centré autour d'un axe de rotation du premier ou du second organe rotatif.

3. Appareil d'enregistrement et/ou de restitution magnétique selon la revendication 2, dans lequel un quatrième organe rotatif (21) est disposé entre le troisième organe rotatif (23) et le pignon à came (20) et a une partie dentée destinée à coopérer avec le troisième organe rotatif (23) et un axe (22) destiné à coopérer avec la première partie de came (20a), et la force de rotation de la première partie de came (20a) est transmise par le quatrième organe rotatif (21) au troisième organe rotatif (23).

4. Appareil d'enregistrement et/ou de restitution magnétique selon l'une quelconque des revendications 1 à 3, dans lequel le dispositif de commande de freinage a une partie convexe ou concave, et le dispositif de commande de freinage est commandé afin qu'il vienne au contact des deux tables (4, 5) ou s'en sépare par déplacement de la partie convexe ou concave qui présente une différence de niveau dans ladite partie.

5. Appareil d'enregistrement et/ou de restitution magnétique selon la revendication 1, comprenant en outre un dispositif de freinage progressif (64) destiné à venir au contact de la table (4) de bobine débitrice ou de la table (5) de bobine réceptrice ou à s'en séparer, le dispositif de freinage progressif (64) ayant une force de contact inférieure à celle des autres dispositifs de freinage (63, 65) et étant commandé par le coulisseau (62) de commande de freinage.

6. Appareil d'enregistrement et/ou de restitution magnétique selon la revendication 1, dans lequel le dispositif (47, 71) de commande du galet de pincement est au contact, par l'une de ses extrémités, du coulisseau (62) de commande de freinage et, à l'autre extrémité, du dispositif (37) de support de galet de pincement et il est supporté par le sous-châssis de manière qu'il puisse tourner.

7. Appareil d'enregistrement et/ou de restitution magnétique selon l'une quelconque des revendications 1 à 6, comprenant en outre un second dispositif de commande à galet de pincement destiné à déplacer le dispositif (37) de support de galet de pincement entre une première position proche du dispositif à cabestan (30) et une seconde position distante de celui-ci en coopération avec la première partie de came (20a).

8. Appareil d'enregistrement et/ou de restitution magnétique selon la revendication 7 lorsqu'elle dépend de la revendication 3, dans lequel le second dispositif de commande de galet de pincement est entraîné par le quatrième dispositif rotatif (21) pendant une période au cours de laquelle le dispositif de chargement (6) est entraîné.

9. Appareil d'enregistrement et/ou de restitution magnétique selon l'une quelconque des revendications 1 à 8, comprenant en outre:

une plaque coulissante (74) destinée à se déplacer en translation au moins entre une première et une seconde position d'après le déplacement du dispositif (61) de réglage de mode et supportant en rotation un cinquième et un sixième organe rotatif (75, 76) qui sont en coopération mutuelle,

des leviers de support (81, 82) destinés à supporter en rotation un septième organe rotatif (80) et, suivant le fonctionnement de la plaque coulissante (74), à mettre sélectivement le septième organe rotatif (80) dans une troisième position dans laquelle il est placé entre la table (4) de bobine débitrice et le cinquième organe rotatif (75) et une quatrième position dans laquelle il se trouve entre la table (5) de bobine réceptrice et le sixième organe rotatif (76),

un dispositif (88) de coopération réglé sélectivement à un état de repos ou à un état dans lequel il est destiné à se déplacer d'après le fonctionnement d'un dispositif électromagnétique (91), et

un dispositif (86) à levier de commutation supporté sur la plaque coulissante (74) afin qu'il puisse se déplacer et qui est au contact du dispositif de coopération (88) et est destiné à mettre sélectivement les leviers de support (81, 82) dans la troisième ou la quatrième position en fonction du coulissement de la plaque coulissante (74) et à un état dans lequel le dispositif de coopération (86) est réglé,

si bien que le dispositif de coopération (88) est mis à un état dans lequel il peut se déplacer librement sous la commande du dispositif électromagnétique (91), la plaque coulissante (74) est déplacée par coulissement de la première position à la seconde par le levier (61) de réglage de mode afin que le dispositif de coopération (88) soit déplacé par le dispositif à levier de commutation (86) et que le septième organe rotatif (80) soit mis dans la troisième position, pendant que le dispositif de coopération (88) est mis à l'état de repos par le dispositif électromagnétique (91) et la plaque coulissante (74) est déplacée par coulissement de la première position vers la seconde par le levier de réglage de mode (61), si bien que le dispositif de coopération est déplacé par les leviers de support (81, 82) par l'intermédiaire du dispositif à levier de commutation et que le septième organe rotatif (80) est mis dans la quatrième position.

10. Appareil d'enregistrement et/ou de restitution magnétique selon la revendication 9, dans lequel les leviers de support (81, 82) sont supportés sur le châssis afin qu'ils puissent tourner et sont formés par un premier levier (82) couplé par un ressort (83) à la plaque coulissante (74) et un second levier (81) dont une première extrémité est couplée au premier levier (82) de manière articulée afin qu'une charge prédéterminée en rotation soit appliquée, l'autre extrémité du levier supportant le septième organe rotatif (80) afin qu'il puisse tourner.

11. Appareil d'enregistrement et/ou de restitution magnétique selon la revendication 9, dans lequel le dispositif à levier de commutation (86) a une saillie (86a) formée à un emplacement tel que, lorsque le dispositif de coopération (88) est réglé à un état mobile, la saillie (86a) repousse la plaque coulissante (74) par coulissement afin qu'elle déplace le dispositif de coopération (88) alors que, lorsque le dispositif de coopération est mis à l'état de repos, la saillie (86) déplace le dispositif à levier de commutation en fonction du coulissement de la plaque coulissante.

12. Appareil d'enregistrement et/ou de restitution magnétique selon la revendication 9 ou 11, dans lequel le dispositif de coopération (88) est formé d'un levier rotatif dont une extrémité peut être au contact du dispositif électromagnétique (91) et dont l'autre extrémité est au contact au moins de la saillie (86a) du dispositif à levier de commutation (86).

13. Appareil d'enregistrement et/ou de restitution magnétique selon la revendication 11, dans lequel, lorsque la plaque coulissante (74) est disposée dans la seconde position, le dispositif électromagnétique (91) met le dispositif de coopération (88) à l'état de repos si bien que la plaque coulissante (74) est bloquée dans la seconde position par la saillie (86a) en étant supportée.

14. Appareil d'enregistrement et/ou de restitution magnétique selon la revendication 12, comprenant en outre des gorges de guidage (85) ayant pratiquement une forme en L et formées dans le châssis et permettant l'introduction respective d'un arbre de support du septième organe rotatif (80) dans la troisième et la quatrième position d'après le mouvement des leviers de support (81, 82).

15. Appareil d'enregistrement et/ou de restitution magnétique selon la revendication 9, dans lequel la première position est une position de mode d'arrêt, la seconde position est une position d'avance rapide (FF) ou de réenroulement (REW), la troisième position est une position d'avance rapide (FF), et la quatrième position est une position de réenroulement (REW).

FIG. 1

EP 0 168 987 B1

EP 0 168 987 B1

# FIG. 2

FIG. 3

# FIG. 4

F I G. 5

*F I G. 6A*

*F I G. 6B*

# FIG. 7A

FIG. 7B

FIG. 7C

EP 0 168 987 B1

FIG. 8A

FIG. 8B

EP 0 168 987 B1

FIG. 8C

FIG. 9A

FIG. 9B

EP 0 168 987 B1

F I G. 9C